# FASCICULE DE BREVET EUROPEEN

(11) **EP 1 727 961 B1**
(45) Date de publication et mention de la délivrance du brevet: **22.08.2007**
(21) Numéro de dépôt: 05736558.7
(22) Date de dépôt: 09.03.2005
(51) Int. Cl.: E21B 43/013, E21B 17/01

(54) **METHODE ET INSTALLATION POUR LA MISE EN SERVICE D'UNE CONDUITE**
VERFAHREN UND SYSTEM ZUR INBETRIEBNAHME EINER ROHRLEITUNG
METHOD AND SYSTEM FOR STARTING UP A PIPELINE

(30) Priorité: 16.03.2004 FR 0402695
(43) Date de publication de la demande: 06.12.2006
(73) Titulaire: Technip France, 92400 Courbevoie (FR)
(72) Inventeur: LUPPI, Ange, F-30000 Nîmes (FR); DALY, Roland, F-34000 Montpellier (FR)
(74) Mandataire: Bertrand, Didier
(86) Numéro de dépôt international: PCT/FR2005/000558
(87) Numéro de publication internationale: WO 2005/100741

(56) Documents cités:
- US-A- 3 931 670
- US-B1- 6 595 725

## Description

La présente invention se rapporte à une méthode et à une installation pour la mise en service d'une conduite de fond adaptée au transport des hydrocarbures pour l'exploitation offshore.

Selon des méthodes déjà connues, la conduite de fond (flowline en langue anglaise) qui est par exemple une conduite du type rigide, est tout d'abord étendue sur le fond marin et raccordée à une tête de puits d'exploitation pétrolière ou à une pluralité de têtes de puits, et ensuite son extrémité de raccordement est raccordée à l'extrémité libre d'une conduite montante sous-marine(riser, en langue anglaise) étendue en caténaire qui elle aussi, peut être rigide. Cette conduite montante sous-marine est destinée à rejoindre par exemple une installation de surface tell e qu'une plate-forme.

Pour réaliser ce raccordement une méthode connue consiste à raccorder horizontalement la conduite montante sous-marine (Riser) à l'extrémité de raccordement de la conduite de fond, sensiblement parallèlement à la surface du fond marin.

Après avoir réalisé les connexions, la mise en service de la conduite de fond consiste à véhiculer l'hydrocarbure qui arrive à la tête de puits, à travers la conduite de fond et la conduite sous-marine montante jusqu'à l'installation de surface.

Ainsi, on pose entièrement la conduite montante sous-mari ne sur le fond marin puis le raccordement est réalisé grâce à des robots sous-marins télécommandés (ROV en langue anglaise, acronyme de Remotely Operated Vehicule) qui viennent se poser, soit sur la conduite de fond pour tirer au moyen d'un câble la conduite sous-marine montante, soit sur l'extrémité libre de la conduite montante sous-marine pour l'entraîner jusqu'à l'extrémité de raccordement de la conduite de fond. Ensuite, l'autre extrémité de la conduite montante sous-marine est remontée vers l'installation de surface.

Une telle méthode est notamment illustrée dans le document US 5 975 803. Cependant d'autres méthodes connues permettent de parvenir à ce résultat.

Ainsi, la conduite montante sous-marine présente, une extrémité libre qui est raccordée à ladite extrémité de raccordement de ladite conduite de fond, une première portion qui s'étend sur le fond marin à partir de cette extrémité libre, et une portion montante qui elle, s'étend asymptotiquement à l'aplomb de l'installation de surface. Entre la première portion et la portion montante, une zone de touche (touch-down zone, en langue anglaise) qui correspond à une zone dynamique de la conduite montante est susceptible de présenter un point de touche (touch-down point) qui lui est alternativement entraîné contre le fond marin, notamment par les mouvements de l'installation de surface.

Quant à la conduite de fond, elle est susceptible de se déformer longitudinalement.

Lorsque la conduite est rigide, l'hydrocarbure qui transite par la tête de puits est généralement chaud ce qui provoque la dilatation et l'élongation de la conduite de fond. Dans le cas de conduites de fond flexibles, l'injection d'un fluide sous pression à l'intérieur provoque également leur élongation.

Cela a pour conséquence d'entraîner en mouvement l'extrémité de raccordement de la conduite de fond et la première portion de la conduite montante sous-marine sur une distance de l'ordre du mètre, par exemple 5 mètres.

Or, la pression en hydrocarbure à travers la conduite de fond n'est pas nécessairement constante et au surplus, la conduite peut cesser d'être alimentée en raison, soit d'un incident ou pour réaliser une opération de maintenance au niveau de la tête de puits.

Un inconvénient réside alors dans les variations dimensionnelles de la conduite de fond, liées à un réchauffement et à un refroidissement de la conduite de fond ou bien à une variation de pression, ce qui peut provoquer alors, non seulement le frottement de ladite première portion de conduite montante sous-marine sur le fond marin qui peut être abrasif, mais aussi la variation du rayon de courbure de la conduite montante sous-marine entre cette portion et la portion montante, et encore le déplacement de la position du point de touche sur la conduite. Ces inconvénients contribuent à la détériorer notablement.

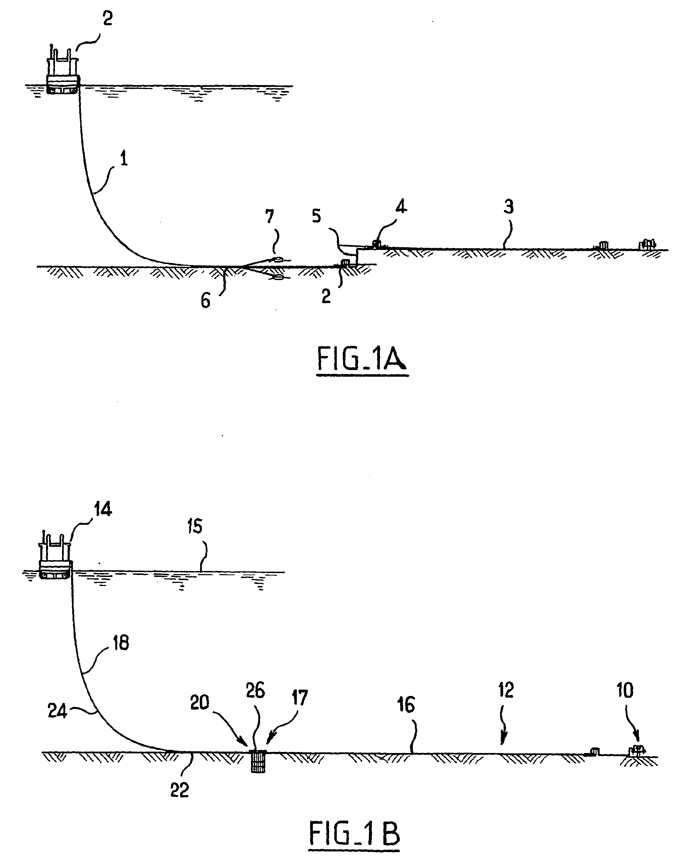

Selon l'art antérieur illustré sur la Figure 1A, on pallie les inconvénients précités en raccordant la conduite montante à la conduite de fond par l'intermédiaire d'un conduit flexible. Sur cette Figure 1A, on trouve une conduite montante 1 qui s'étend entre une extrémité libre ancrée dans le fond marin et une installation de surface 2, et une conduite de fond 3 dont l'extrémité de raccordement 4 qui est ancrée également, est raccordée à la conduite montante 1 par un conduit flexible 5. Une première portion 6 de la conduite montante 1 est amarrée par des plots 7 en dehors de l'axe de la conduite de fond 3, de sorte que les variations dimensionnelles de la conduite de fond 3 sont compensées par la déformation du conduit flexible 5. Ce dernier peut d'ailleurs être réalisé par un élément de conduite rigide en U, apte à se déformer.

Une telle installation est peu économique à mettre en oeuvre, compte tenu des différents points d'ancrage à réaliser.

Un problème qui se pose et que vise à résoudre la présente invention, est alors de proposer une méthode et une installation de mise en service d'une conduite de fond, qui permettent d'allonger la durée de vie des conduites sous-marines montantes en évitant leur frottement sur le fond marin et leur déformation, et ce à un coût avantageux.

Dans ce but et selon un premier objet, la présente invention propose une méthode de mise en service d'une conduite de fond adaptée au transport des hydrocarbures, ladite conduite de fond étant étendue sur le fond marin à partir d'une tête de puits et se terminant par une extrémité de raccordement, ladite extrémité de raccordement étant susceptible d'être raccordée à une conduite montante sous-marine étendue en caténaire, ladite méthode comprenant une première étape dans laquelle on provoque l'élongation de ladite conduite de fond ; ladite méthode comprenant en outre une seconde étape dans laquelle on bloque ladite extrémité de raccordement par rapport audit fond marin, pour maintenir ladite conduite de fond dans sa position allongée.

Ainsi, une caractéristique de l'invention réside dans le blocage de l'extrémité de raccordement de la conduite de fond après qu'elle a été dilatée et allongée par exemple lorsque l'on fait circuler un fluide chaud à travers ladite conduite de fond, ce fluide chaud est par exemple de l'eau chaude injectée sous pression pour la tester. De la sorte, lorsque la conduite de fond se refroidit parce que l'eau chaude cesse d'être injectée ou que l'hydrocarbure initialement chaud stagne dans la conduite, cette dernière tend à se rétracter, ce qui induit des contraintes internes, puisqu'elle est maintenue à son extrémité de raccordement, mais ses dimensions longitudinales ne varient pas. En conséquence, les déformations de la conduite de fond ne provoquent plus les mouvements de la conduite montante sous-marine qui y est reliée par l'extrémité de raccordement, de telle sorte que cette dernière n'est plus détériorée.

De façon particulièrement avantageuse, on autorise le déplacement de ladite extrémité de raccordement dans le sens de l'élongation de ladite conduite de fond et on interdit le déplacement de ladite extrémité de raccordement dans un sens opposé. Ainsi, durant ladite première étape, tant que la conduite de fond se déforme sous l'effet de la température et qu'elle s'allonge, son extrémité de raccordement se déplace en translation, et dès qu'elle se refroidit et qu'elle tend à se rétracter, elle est bloquée sous contrainte grâce à l'extrémité de raccordement qui elle, est maintenue bloquée en translation dans le sens de la rétraction de la conduite de fond. De la sorte, la conduite de fond peut être bloquée dans son état de déformation maximale.

Préférentiellement, on guide ladite extrémité de raccordement en translation au cours de l'élongation de ladite conduite de fond, de manière à pouvoir simplifier la forme des moyens de blocage que l'on décrira ci-après.

En outre, selon une étape préliminaire avantageuse, on dépose ladite conduite de fond sur le fond marin et on installe ladite conduite sous-marine montante, puis on raccorde ladite conduite montante sous-marine à l'extrémité de raccordement durant ladite étape préliminaire.

Selon un autre objet, la présente invention propose une installation pour la mise en service d'une conduite de fond adaptée au transport des hydrocarbures, ladite conduite de fond étant étendue sur le fond marin à partir d'une tête de puits et se terminant par une extrémité de raccordement, ladite extrémité de raccordement étant susceptible d'être raccordée à une conduite montante sous-marine étendue en caténaire, ladite conduite de fond étant susceptible de s'allonger ; ladite installation comprenant des moyens de blocage pour bloquer ladite extrémité de raccordement par rapport audit fond marin pour maintenir ladite conduite de fond dans sa position allongée.

Ainsi, les moyens de blocage que l'on décrira dans la suite de la description, qui sont solidaires du fond marin et y sont parfaitement amarrés, permettent de maintenir en position fixe par rapport audit fond l'extrémité de raccordement.

Selon un mode particulier de réalisation, lesdits moyens de blocage comprennent des moyens d'arrêt unidirectionnels adaptés à autoriser le déplacement de ladite extrémité de raccordement dans le sens de l'élongation de ladite conduite de fond et à interdire le déplacement de ladite extrémité de raccordement dans un sens opposé. De la sorte, l'extrémité de raccordement peut se déplacer dans un sens opposé à la conduite de fond qui s'allonge et qui l'entraîne et en revanche, il est immobilisé par rapport au fond marin dans le sens opposé.

Préférentiellement, l'installation comprend des moyens de guidage comportant un chariot mobile auquel ladite extrémité de raccordement est adaptée à être reliée, ledit chariot mobile étant susceptible de coulisser sur des moyens formant rails. De la sorte, l'extrémité de raccordement est parfaitement guidée en translation sur le fond marin selon une direction, alors que la conduite de fond ne se déforme pas nécessairement de façon uniforme et selon une seule direction.

Afin d'amarre parfaitement le chariot et l'extrémité de raccordement qui y est reliée, l'installation comprend une embase ancrée dans le fond marin, lesdits rails étant solidaires de ladite embase. Bien évidemment, une telle embase est adaptée à supporter les tractions exercées par la conduite de fond tout en restant immobile par rapport au fond marin.

Selon une caractéristique de mise en oeuvre de l'invention particulièrement avantageuse, lesdits moyens unidirectionnels comprennent des moyens formant crémaillère montés selon la direction desdits moyens formant rails et des moyens formant cliquet montés sur ledit chariot, lesdits moyens formant cliquet étant adaptés à venir s'engager dans lesdits moyens formant crémaillère. Ainsi, les moyens formant cliquet sont adaptés à s'engager de façon inclinée entre deux dents de la crémaillère pour bloquer le chariot en translation selon un sens, et à basculer par-dessus les dents lorsque le chariot est entraîné dans le sens opposé, par l'élongation de la conduite de fond.

Selon un mode de réalisation de l'invention, particulièrement avantageux, ledit chariot comprend des premiers moyens de réception adaptés à recevoir ladite extrémité de raccordement de la conduite de fond. De la sorte, comme on l'expliquera plus en détail dans la suite de la description, la conduite de fond, terminée par son extrémité de raccordement est adaptée à être installée dans les moyens de réception qui eux sont pré-installés, en déroulant ladite conduite de fond depuis un navire de surface.

Par ailleurs, selon un mode de réalisation de l'invention particulier, ledit chariot comprend en outre des seconds moyens de réception adaptés à recevoir une extrémité libre de ladite conduite montante sous-marine pour connecter ensemble ladite extrémité de raccordement et ladite extrémité libre après que la conduite de fond a été installée.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1A est une vue schématique en coupe verticale d'une installation selon l'art antérieur ;
- la Figure 1 B est une vue schématique en coupe verticale d'une installation conforme à l'invention ;
- la Figure 2 est une vue schématique de face illustrant des éléments de l'installation représentés sur la Figure 1B dans une première phase d'une étape préliminaire de la méthode de mise en place ;
- la Figure 3 est une vue schématique de face illustrant les éléments de l'installation représentés sur la Figure 1 B dans une seconde phase de l'étape préliminaire ;
- la Figure 4 est une vue schématique de face illustrant les éléments de l'installation représentés sur les Figures 2 et 3 à la fin de la seconde phase ;
- la Figure 5 est une vue schématique d'un élément illustré sur la Figure 4, selon une coupe verticale V-V ;
- la Figure 6 est une vue schématique de dessus des éléments illustrés sur la Figure 4 ;
- la Figure 7 illustre l'installation dans une phase intermédiaire de connexion, entre l'étape préliminaire et une première étape dans laquelle on fait circuler un fluide chaud dans la conduite de fond ;
- la Figure 8 est une vue schématique de détails montrant deux états possibles d'un élément représenté sur la Figure 7 ;
- la Figure 9 est une vue schématique de face l'installation illustrée sur la Figure 7 dans une seconde étape ;
- la Figure 10 est une vue schématique de face de l'installation représentée sur la Figure 9 dans une phase d'ajustement ; et,
- la Figure 11 montre des éléments d'une installation selon une variante d'exécution dans une phase préliminaire de la méthode de mise en place.

On décrira en référence aux Figures 1 à 10, les éléments structurels de l'installation conforme à l'invention et parallèlement la méthode pour sa mise en place.

La Figure 1 B illustre une installation conforme à l'invention, entre une tête de puits 10 située sur un fond marin 12 et une installation de surface 14 adaptée à la récupération d'un hydrocarbure et qui est flottante à la surface de l'eau 15. Cette installation comporte une conduite de fond 16 terminée par une extrémité de raccordement 17, qui repose sur le fond marin 12 et une conduite montante sous-marine 18 qui la prolonge et qui rejoint l'installation de surface 14.

Cette conduite montante 18, présente avant d'être connectée, une extrémité libre 20, une première portion 22 qui est en appui sur le fond marin et une partie en asymptote 24 qui rejoint l'installation de surface 14.

Une caractéristique essentielle de l'invention que l'on détaillera ci-après réside dans les moyens de jonction 26 entre la conduite de fond 16 et la conduite montante 18 qui permettent d'éviter les mouvements relatifs de l'extrémité de raccordement 17 et par conséquent de la conduite montante 18, qui sont dus à la déformation de la conduite de fond sous l'effet des variations de température ou de pression.

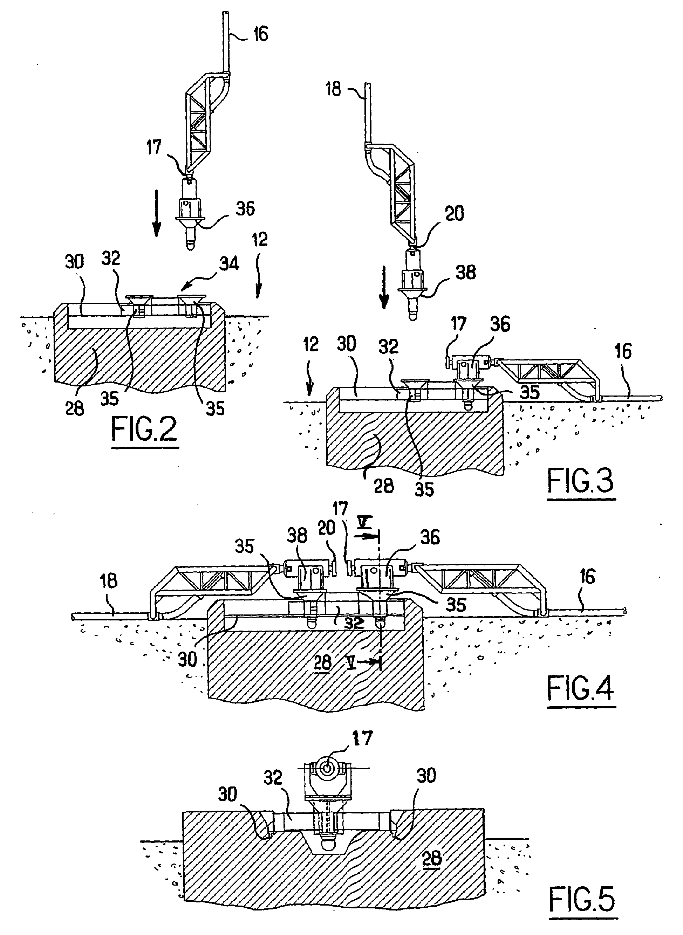

On se réfèrera maintenant aux Figures 2 et 3 illustrant en détail le mode d'installation des conduites de fond 16 et conduite montante 18.

On retrouve sur la Figure 2 le fond marin 12 et l'extrémité de raccordement 17 de la conduite de fond 16 en cours d'installation.

Au préalable à l'installation, on a ancré dans le fond marin 12 à une distance déterminée de la tête de puits 10, un socle ou une embase 28. Cette embase 28 présente des rails 30 ou glissières et un chariot mobile 32 sur ces rails 30, selon une direction orientée vers la tête de puits 10 et que l'on détaillera dans la suite de la description. Le chariot 32 est ici dans une position initiale non active déportée vers la tête de puits 10. En outre, le chariot 32 présente des moyens de réception 34 tubulaires convergents comportant deux pièces de réception 35 formant entonnoir adaptés à recevoir un premier organe de liaison 36 qui lui est monté pivotant à l'extrémité de raccordement 17.

Ainsi, la conduite de fond 16 est posée depuis un navire de surface 18 non représenté situé au droit de l'embase, et elle s'étend alors sensiblement verticalement entre la surface 15 et le fond marin 12. L'extrémité de raccordement 17 est alors guidée tout en posant la conduite de fond, de façon à ajuster l'organe de liaison 36 verticalement dans la pièce de réception 35 située vers la tête de puits. Bien entendu, toutes les méthodes bien connues de pose des conduites rigides sont susceptibles d'être mise en oeuvre, notamment les méthodes de pose, dite en « J » ou en « S ».

Ensuite, on déroule entièrement la conduite de fond 16 vers la tête de puits 10, et elle pivote au niveau de son extrémité de raccordement qui est alors maintenue en position fixe dans un plan sensiblement horizontal parallèlement au fond marin 12, grâce à l'organe de liaison 36 qui lui est maintenu dans la pièce de réception 35, elle-même solidaire du chariot 32 et de l'embase 28.

On a représenté sur la Figure 3, la conduite de fond 16 ainsi installée. Après pivotement de la conduite de fond 16, l'extrémité de raccordement 17 est dégagée et orientée dans la direction de l'autre pièce de réception 35.

De la même manière, la conduite montante 18 qui présente un second organe de liaison 38 monté pivotant sur l'extrémité libre 20, va être installée et reliée à l'autre pièce de réception 35. Ensuite, après déroulement de la conduite montante 18 de façon que sa première portion 22 soit disposée en appui sur le fond marin 12 selon la direction de la conduite de fond 16, dans un sens opposé, son extrémité libre qui a pivoté, se trouve alors positionnée en regard de l'extrémité de raccordement 17 de la conduite de fond 16.

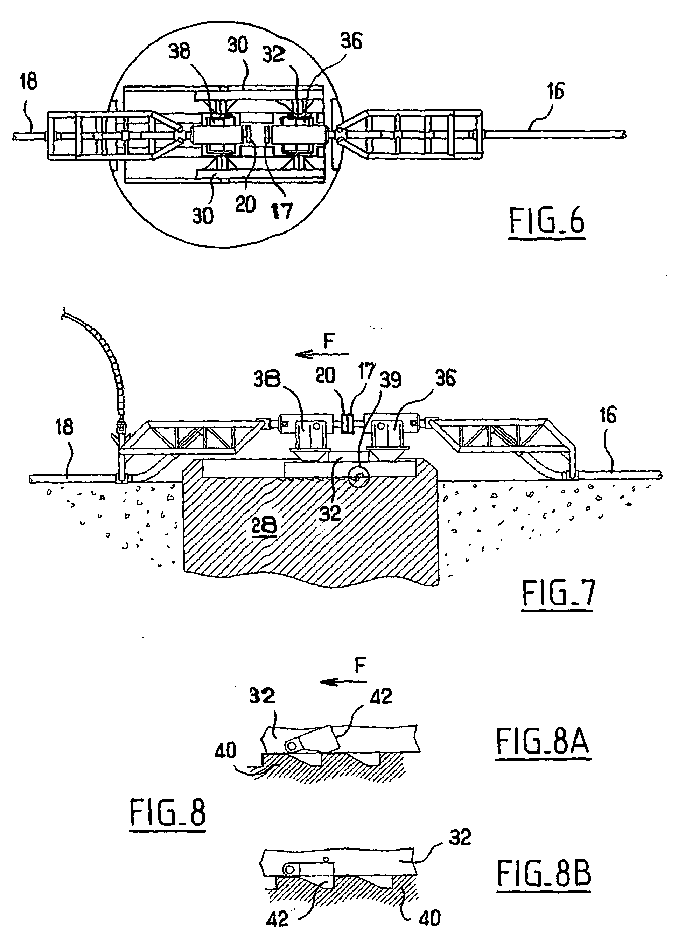

On retrouve sur les Figures 4 et 5, l'extrémité de raccordement 17 en regard et à distance d'un mètre par exemple, de l'extrémité libre 20, le chariot 32 étant lui toujours dans sa position initiale non active.

Par ailleurs, l'extrémité de raccordement 17 et/ou l'extrémité libre 20 sont montées respectivement de manière coulissante dans un manchon qui lui est monté pivotant respectivement sur les organes de liaison 36, 38. De la sorte, grâce à un robot sous-marin télécommandé (ROV) les deux extrémités en regard 17, 20 vont être rapprochées l'une vers l'autre et raccordées ensemble de manière étanche pour assurer le passage de l'hydrocarbure de la conduite de fond 16 à la conduite montante 18 sans fuite.

On retrouve ainsi sur la Figure 7, les deux conduites 16, 18 raccordées, par leurs extrémités 17, 20. Les phases précédentes de l'installation constituent une étape préliminaire de la méthode de mise en oeuvre, et à partir de la position dans laquelle les conduites sont raccordées, telle qu'illustrée sur la Figure 7, une seconde étape consiste à mettre en service les conduites en injectant par exemple de l'eau chaude dans la conduite de fond 16 depuis la tête de puits 10 pour contrôler et tester l'ensemble des conduites. Ainsi, on récupère l'eau chaude à une extrémité de surface de la conduite montante 18.

Ce fluide chaud, provoque, de la même façon que l'hydrocarbure chaud qui le traversera, l'élongation de la conduite de fond 16 de telle sorte que l'extrémité de raccordement 17 et l'extrémité libre 20 qui maintenant y est raccordée sont entraîné en mouvement dans un sens opposé à la tête de puits 10 selon la flèche F.

Ainsi, le chariot 32 qui est solidaire en translation des extrémités de conduites va par là-même, être entraîné en translation sur ses rails 30 ou glissières, à partir de sa position initiale telle que représentée également sur la Figure 7 et dans le sens de F.

Toutefois grâce à des moyens d'arrêt unidirectionnels 39 que l'on décrira en détail et en référence aux Figures 5 et 8, le déplacement en translation du chariot 32 dans le sens de la flèche F opposé à la tête de puits est autorisé alors que le déplacement vers la tête de puits est interdit.

Les variations dimensionnelles de la conduite de fond interviennent ici après l'installation et le raccordement de la conduite de fond et de la conduite montante qui sont alors mises en service. Néanmoins, il est envisagé, selon une variante de réalisation, d'installer la conduite de fond et de la tester sous pression, avant de la raccorder. Dans ce cas, l'extrémité de raccordement de la conduite de fond est bloquée en translation de la même façon que précédemment, après que la conduite a été allongée par la mise en pression. Ensuite, la conduite montante est susceptible d'être installée et raccordée à la conduite de fond.

On retrouve sur la Figure 5 en coupe verticale, le chariot 32 et l'embase 28 sur laquelle il repose par l'intermédiaire des rails 30. En outre de chaque côté du chariot 32 au voisinage des rails 30 une crémaillère 42 est montée solidaire de l'embase 28 et s'étend parallèlement aux rails 30 avec des dents orientées dans le sens de la flèche F.

On retrouve partiellement la crémaillère 40 sur la Figure 8 et une partie du châssis du chariot 32 qui est adapté à coulisser parallèlement à la crémaillère 40. En outre, la Figure 8 illustre une pièce mobile 42 formant cliquet, dans deux états possibles. Un premier état selon la Figure 8A dans lequel la pièce mobile 42 est basculée par-dessus une dent de la crémaillère 40 et un second état, illustré sur la Figure 8B dans lequel la pièce mobile 42 est engagée entre deux dents de la crémaillère 40. Ainsi, le chariot 32 est apte à être entraîné en translation selon F, la pièce mobile 42 étant alors adaptée à basculer par-dessus les dents et il est bloqué dans le sens opposé à F, la pièce mobile 42 étant alors engagée entre les dents.

Par ailleurs, le chariot 32 est suffisamment pesant et il est maintenu en coulissement sur les rails 30 de façon à être bloqué verticalement pour éviter que, d'une part il sorte des rails 30 et d'autre part que les pièces mobiles 42 échappent aux crémaillères 40.

Ainsi, au fur et à mesure que la conduite de fond se déforme longitudinalement le chariot 32 est entraîné en mouvement dans la direction opposée à la tête de puits 10 selon F. En revanche, dès que la température du fluide qui traverse la conduite de fond 16 diminue, elle est bloquée grâce au chariot 32 qui lui est bloqué en translation.

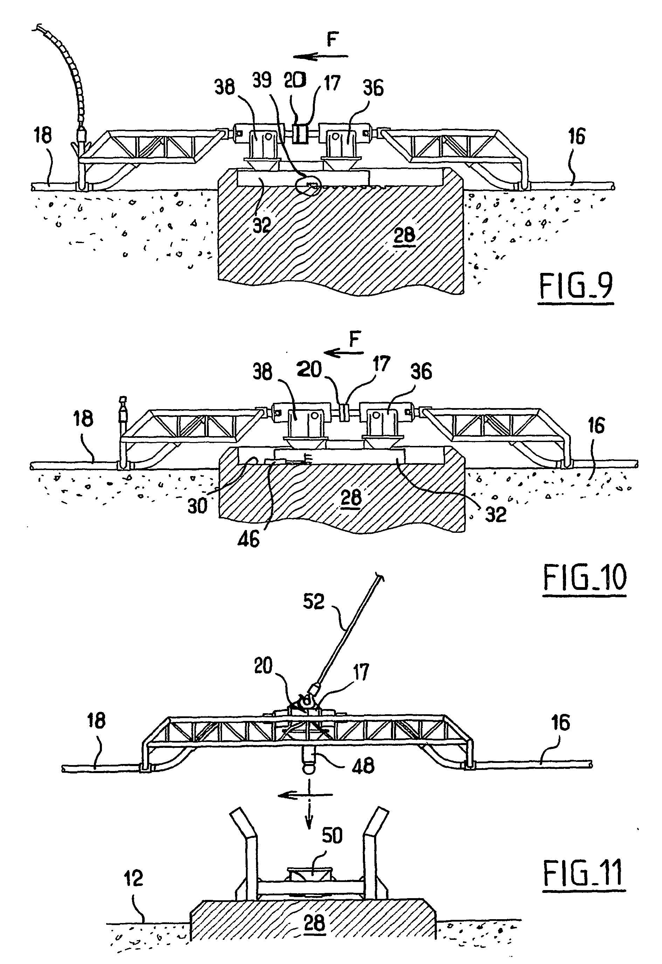

Ainsi, dans une situation de déformation maximale, telle qu'illustrée sur la Figure 9, le chariot 32 est bloqué dans une position active maximale et il ne peut plus revenir à sa position initiale à moins de dégager les pièces mobiles 42. En conséquence, après que l'installation a été mise en service, dans des conditions normales de fonctionnement, les variations de température ou de pression de la conduite de fond ne provoquent plus l'élongation de la conduite qui est alors figée dans sa position d'élongation maximale.

Néanmoins, afin de décaler la position du point de touche sur la conduite montante pour en allonger la durée de vie on prévoit des moyens de déplacement 46 illustrés sur la Figure 10, qui visent à réajuster la position du chariot sur l'embase 28. Ainsi, en faisant varier la position relative de l'extrémité libre de la conduite montante 18 et de l'installation de surface, on déplace le point de contact de la conduite montante sur le fond marin.

Ces moyens de déplacement comprennent par exemple un vérin hydraulique, dont une extrémité est solidaire des rails 30 et l'autre extrémité est solidaire du chariot 32.

Par ailleurs, selon une autre variante de mise en oeuvre de l'invention, illustrée sur la Figure 11, sur laquelle on retrouve l'embase 28, la conduite de fond 16 et la conduite montante 18 en cours d'installation, les extrémités de raccordement 20, 17 sont pré-raccordées sur le navire de pose et le raccord qui est équipé d'un seul organe de liaison 48 qui va être ajusté dans une seule pièce de réception 50 est guidé vers l'embase 28 au moyen d'une élingue 52.

Ensuite, et de la même manière que pour la variante précédente, la pièce de réception 50 qui est solidaire d'un chariot va être entraînée en translation selon F, sous l'effet de l'élongation de la conduite de fond 16 et bloquée en translation dans la direction opposée.

## Revendications

1. Méthode de mise en service d'une conduite de fond adaptée au transport des hydrocarbures, ladite conduite de fond étant étendue sur le fond marin à partir d'une tête de puits et se terminant par une extrémité de raccordement, ladite extrémité de raccordement étant destinée à être raccordée à une conduite montante sous-marine étendue en caténaire, ladite méthode comprenant une première étape dans laquelle on provoque l'élongation de ladite conduite de fond ;
**caractérisée en ce qu'**elle comprend en outre une seconde étape dans laquelle on bloque ladite extrémité de raccordement par rapport audit fond marin, pour maintenir ladite conduite de fond dans sa position allongée.

2. Méthode selon la revendication 1, **caractérisée en ce qu'**on autorise le déplacement de ladite extrémité de raccordement dans le sens de l'élongation de ladite conduite de fond et on interdit le déplacement de ladite extrémité de raccordement da ns un sens opposé.

3. Méthode selon la revendication 1 ou 2, **caractérisée en ce qu'**on guide ladite extrémité de raccordement en translation au cours de l'élongation de ladite conduite de fond.

4. Méthode selon l'une quelconque des revendications 1 à 3, **caractérisé en ce qu'**elle comprend en outre une étape préliminaire dans laquelle on dépose ladite conduite de fond sur le fond marin et on installe ladite conduite sous-marine monta nte.

5. Méthode selon la revendication 4, **caractérisée en ce qu'**on raccorde ladite conduite montante sous-marine à l'extrémité de raccordement durant ladite étape préliminaire.

6. Installation pour la mise en service d'une conduite de fond (16) adaptée au transport des hydrocarbures, ladite conduite de fond (16) étant étendue sur le fond marin (12) à partir d'une tête de puits (10) et se terminant par une extrémité de raccordement (17), ladite extrémité de raccordement (17) étant adaptée à être raccordée à une conduite montante sous-marine (18) étendue en caténa ire, ladite conduite de fond (16) étant susceptible de s'allonger ;
**caractérisée en ce qu'**elle comprend des moyens de blocage pour bloquer ladite extrémité de raccordement par rapport audit fond marin (12) pour maintenir ladite conduite de fond (16) dan s sa position allongée.

7. Installation selon la revendication 6, **caractérisée en ce que** lesdits moyens de blocage comprennent des moyens d'arrêt unidirectionnels (39) adaptés à autoriser le déplacement de ladite extrémité de raccordement (17) dans le sens de l'élongation de ladite conduite de fond (16) et à interdire le déplacement de ladite extrémité de raccordement (17) dans un sens opposé.

8. Installation selon la revendication 7, **caractérisée en ce qu'**elle comprend des moyens de guidage comportant un chariot mobile (32) auquel ladite extrémité de raccordement (17) est adaptée à être reliée, ledit chariot mobile (32) étant susceptible de coulisser sur des moyens formant rails (30).

9. installation selon la revendication 8, **caractérisée en ce qu'**elle comprend une embase (28) ancrée dans le fond marin (12), lesdits rails (30) étant solidaires de ladite embase (28).

10. installation selon la revendication 8 ou 9, **caractérisée en ce que** lesdits moyens unidirectionnels (39) comprennent des moyens formant crémaillère (40) montés selon la direction desdits moyens formant rails (30) et des moyens formant cliquet (42) montés sur ledit chariot (32), lesdits moyens formant cliquet (42) étant ad aptés à venir s'engager dans lesdits moyens formant crémaillère (40).

11. Installation selon l'une quelconque des revendications 8 à 10, **caractérisée en ce que** ledit chariot (32) comprend des premiers moyens de réception (35) adaptés à recevoir ladite extrémité de raccordement.

12. Installation selon la revendication 9, **caractérisée en ce que** ledit chariot (32) comprend en outre des seconds moyens de réception adaptés à recevoir une extrémité libre de ladite conduite montante sous-marine pour connecter ensemble ladite extrémité de raccordement et ladite extrémité libre.

## Claims

1. A method for starting up a flowline suitable for conveying hydrocarbons, said flowline being extended over the seabed from a wellhead and terminating at a joint end, said joint end being suitable for connection to a subsea riser extended in a catenary, said method comprising a first stage, in which elongation of said flowline is induced;
**characterized in that** it comprises moreover a second stage, in which said joint end is fixed with respect to said seabed to maintain said flowline in its stretched position.

2. The method as claimed in claim 1, **characterized in that** displacement of said joint end is authorized in the direction of elongation of said flowline and displacement of said joint end is prohibited in the opposite direction.

3. The method as claimed in claim 1 or 2, **characterized in that** said joint end is guided in translation during elongation of said flowline.

4. The method as claimed in any one of claims 1 to 3, **characterized in that** it comprises moreover a preliminary stage, in which said flowline is laid on the seabed and said subsea riser is installed.

5. The method as claimed in claim 4, **characterized in that** said subsea riser is connected to the joint end during said preliminary stage.

6. A system for starting up a flowline (16) suitable for conveying hydrocarbons, said flowline (16) being extended over the seabed (12) from a wellhead (10) and terminating at a joint end (17), said joint end (17) being suitable for connection to a subsea riser (18) extended in a catenary, said flowline (16) being able to stretch;
**characterized in that** it comprises locking means for fixing said joint end with respect to said seabed (12) for maintaining said flowline (16) in its stretched position.

7. The system as claimed in claim 6, **characterized in that** said locking means include unidirectional arresting means (39) suited to allowing displacement of said joint end (17) in the direction of elongation of said flowline (16) and to prohibiting displacement of said joint end (17) in the opposite direction.

8. The system as claimed in claim 7, **characterized in that** it comprises guidance means including a moving trolley (32), to which said joint end (17) is suitable for connection, said moving trolley (32) being able to slide on means forming rails (30).

9. The system as claimed in claim 8, **characterized in that** it comprises a base (28) anchored in the seabed (12), said rails (30) being solidly fixed to said base (28).

10. The system as claimed in claim 8 or 9, **characterized in that** said unidirectional means (39) comprise means forming a rack (40), mounted in the direction of said means forming rails (30), and means forming a ratchet (42) mounted on said trolley (32), said means forming a ratchet (42) being suitable for engagement in said means forming a rack (40).

11. The system as claimed in any one of claims 8 to 10, **characterized in that** said trolley (32) comprises first reception means (35) suitable for receiving said joint end.

12. The system as claimed in claim 9, **characterized in that** said trolley (32) comprises, moreover, second reception means suitable for receiving a free end of said subsea riser for interconnecting said joint end and said free end.

## Patentansprüche

1. Verfahren zum Inbetriebnehmen einer Bodenrohrleitung, die zum Transport von Kohlenwasserstoffen angepasst ist, wobei sich die Bodenrohrleitung auf dem Meeresboden von einem Kopf einer Bohrung bzw. eines Schachtes aus erstreckt und in einem Anschlussende endet, wobei das Anschlussende zum Anschluss an eine Unterwassersteigleitung, die sich kettenartig bzw. in Form einer Seilkurve erstreckt, vorgesehen ist, wobei das Verfahren einen ersten Verfahrensschritt aufweist, in welchem die Verlängerung bzw. Dehnung der Bodenrohrleitung bewirkt wird;
**dadurch gekennzeichnet, dass** es außerdem einen zweiten Verfahrensschritt aufweist, in welchem das Anschlussende in Bezug auf den Meeresboden festgesetzt wird, um die Bodenrohrleitung in ihrer verlängerten bzw. gedehnten Stellung beizubehalten.

2. Verfahren nach Anspruch 1, **dadurch gekennzeichnet, dass** die Verlagerung des Anschlussendes in der Richtung der Verlängerung bzw. Dehnung der Bodenrohrleitung ermöglicht und die Verlagerung des Anschlussendes in einer entgegengesetzten Richtung gesperrt wird.

3. Verfahren nach Anspruch 1 oder 2, **dadurch gekennzeichnet, dass** das Anschlussende im Verlauf der Verlängerung bzw. Dehnung der Bodenrohrleitung geradlinig geführt wird.

4. Verfahren nach einem der Ansprüche 1 bis 3, **dadurch gekennzeichnet, dass** es außerdem einen vorbereitenden Verfahrensschritt aufweist, in welchem die Bodenrohrleitung auf dem Meeresboden angeordnet und die Unterwassersteigleitung installiert wird.

5. Verfahren nach Anspruch 4, **dadurch gekennzeichnet, dass** die Unterwassersteigleitung an dem Anschlussende während des vorbereitenden Verfahrensschritts angeschlossen wird.

6. Vorrichtung zur Inbetriebnahme einer Bodenrohrleitung (16), die zum Transport von Kohlenwasserstoffen angepasst ist, wobei sich die Bodenrohrleitung (16) auf dem Meeresboden (12) von einem Kopf einer Bohrung (10) bzw. eines Schachtes aus erstreckt und in einem Anschlussende (17) endet, wobei das Anschlussende (17) zum Anschluss an eine Unterwassersteigleitung (18), die sich kettenartig bzw. in Form einer Seilkurve erstreckt, angepasst ist, wobei die Bodenrohrleitung (16) zur Verlängerung bzw. Dehnung geeignet ist;
**dadurch gekennzeichnet, dass** sie Festsetzeinrichtungen zur Festsetzung des Anschlussendes in Bezug auf den Meeresboden (12) zur Beibehaltung der Bodenrohrleitung (16) in ihrer verlängerten bzw. gedehnten Stellung aufweist.

7. Vorrichtung nach Anspruch 6, **dadurch gekennzeichnet, dass** die Festsetzeinrichtungen in einer Richtung wirkende Halteeinrichtungen (39) aufweisen, welche zur Ermöglichung der Verschiebung des Anschlussendes (17) in der Richtung der Verlängerung bzw. Dehnung der Bodenrohrleitung (16) und zur Sperrung der Verschiebung des Anschlussendes (17) in einer entgegengesetzten Richtung angepasst sind.

8. Vorrichtung nach Anspruch 7, **dadurch gekennzeichnet, dass** sie Führungseinrichtungen mit einem beweglichen Wagen (32) bzw. Schlitten aufweist, wobei das Anschlussende (17) zur Befestigung an diesem angepasst ist, wobei der bewegliche Wagen (32) für eine Gleitverschiebung auf Einrichtungen, welche Schienen (30) bilden, geeignet ist.

9. Vorrichtung nach Anspruch 8, **dadurch gekennzeichnet, dass** sie einen Sockel (28) aufweist, welcher im Meeresboden (12) verankert ist, wobei die Schienen (30) mit dem Sockel (28) verbunden sind.

10. Vorrichtung nach Anspruch 8 oder 9, **dadurch gekennzeichnet, dass** die in einer Richtung wirkenden Einrichtungen (39) Mittel, welche eine Zahnstange (40) bilden und längs der Richtung der Einrichtungen, die Schienen (30) bilden, angebracht sind, und Mittel aufweisen, welche eine Sperrklinke (42) bilden und an dem Wagen (32) angebracht sind, wobei die Mittel, welche eine Sperrklinke (42) bilden, für einen Eingriff in die Mittel, welche eine Zahnstange (40) bilden, angepasst sind.

11. Vorrichtung nach einem der Ansprüche 8 bis 10, **dadurch gekennzeichnet, dass** der Wagen (32) erste Aufnahmemittel (35) aufweist, welche zur Aufnahme des Anschlussendes angepasst sind.

12. Vorrichtung nach Anspruch 9, **dadurch gekennzeichnet, dass** der Wagen (32) außerdem zweite Aufnahmemittel aufweist, welche zur Aufnahme eines freien Endes der Unterwassersteigleitung zur gemeinsamen Verbindung des Anschlussendes und des freien Endes angepasst sind.
